Europäisches Patentamt

(19) European Patent Office

Office européen des brevets

(11) Numéro de publication: **0 092 863**
**B1**

(12) **FASCICULE DE BREVET EUROPEEN**

(45) Date de publication du fascicule du brevet: **20.11.86**

(51) Int. Cl.⁴: **F 16 K 31/60** // F16K11/074

(21) Numéro de dépôt: **83200513.6**

(22) Date de dépôt: **12.04.83**

(54) **Dispositif de raccordement du levier d'un robinet mélangeur à monocommande.**

(30) Priorité: **26.04.82 IT 6754782**

(43) Date de publication de la demande:
**02.11.83 Bulletin 83/44**

(45) Mention de la délivrance du brevet:
**20.11.86 Bulletin 86/47**

(84) Etats contractants désignés:
**DE FR GB**

(56) Documents cités:
**EP-A-0 060 481**
**FR-A-1 470 000**
**FR-A-2 193 947**
**FR-A-2 250 948**

(73) Titulaire: **GEVIPI A.G.**
**Aeulestrasse 5 Postfach 83 Triesen**
**FL-9490 Vaduz (LI)**

(72) Inventeur: **Knapp, Alfons, Dr.**
**Bleicherstrasse 3**
**D-7950 Biberach/Riss (DE)**

(74) Mandataire: **Patrito, Pier Franco, Dr. Ing.**
**Cabinet PATRITO BREVETTI Via Don Minzoni 14**
**I-10121 Torino (IT)**

Courier Press, Leamington Spa, England.

## Description

La présente invention a pour objet un dispositif pour le raccordement entre le doigt intérieur de commande des disques obturateurs et le levier extérieur de manoeuvre d'un robinet mélangeur à monocommande, comprenant un élément de doigt de commande et pourvu d'un trou fileté pour le montage du levier extérieur de manoeuvre, un capuchon qui est serré sur ledit élément de doigt, et qui est pourvu d'un trou correspondant au trou fileté de l'élément de doigt, et une vis de montage pour le levier extérieur de manoeuvre, qui est vissée dans ledit trou fileté de l'élément de doigt en passant à travers ledit trou du capuchon.

Certains types de robinets mélangeurs à monocommande présentant un doigt intérieur de commande des disques obturateurs, auquel doit être relié un levier extérieur de manoeuvre, de plus grande longueur et formant un angle avec ledit doigt pour résulter en position aisée pour l'actionnement. Ce raccordement comporte habituellement un capuchon qui sert aussi à dissimuler le doigt intérieur et les moyens de vissage de mécanisme du robinet. Par exemple, suivant FR—A—1470000, un godet est intégrale du doigt de commande et il est pourvu d'un premier trou fileté pour le montage du levier extérieur de manoeuvre, un capuchon est serré sur ledit godet et il est pourvu d'un trou correspondant audit premier trou fileté du godet. Le bout du levier extérieur de manoeuvre est vissée dans le premier trou fileté du godet en passant à travers le trou correspondant du capuchon. Pour fixer le capuchon sur le godet il y a une vis axiale qui passe du haut à travers un second trou du capuchon. Ce montage, toutefois, ne permet pas de laisser intacte la surface supérieure visible du capuchon qui, dans certains cas, on demande même de décorer par un disque appliqué, en matériau ornemental tel qu'onyx, sodalithe ou autre. Il faut alors abandonner ce type de montage, et pour la connexion du capuchon on se sert de vis placées en des endroits qui deviennent accessibles seulement dans des positions particulières du levier de manoeuvre; ais les solutions possibles ne sont pas tout à fait satisfaisantes, au point de vue esthétique ou bien parce qu'elles comportent des difficultés d'accès à la vis de connexion, et en tout cas elles ampliquent des complications constructives considérables.

Dans les cas où un disque de matériau ornemental est appliqué au capuchon, cette application est faite par collage et, en cas de rupture ou endommagement ou désir de substitution du disque ornemental, il est pratiquement nécessaire de remplacer le robinet tout entier ou tout au moins une partie importante du robinet.

Le but de la présente invention est celui de réaliser un dispositif pour de raccordement entre le doigt intérieur de commande des disques obturateurs et le levier extérieur de manoeuvre d'un robinet mélanger à monocommande, qui, tout en étant dépourvu d'organes de connexion visibles de l'extérieur, résulte d'une fabrication simple et économique et techniquement sûr, et qui autorise toute liberté de dessin pour un projet esthétique. Un autre but de l'invention est celui de réaliser un tel dispositif de raccordement qui consente la facile et rapide substitution du disque ornemental appliqué au capuchon, quand ce disque existe, sans aucune substitution d'autres pièces du robinet ou en substituant un minimum de ses pièces. Un autre but de l'invention est encore celui de réaliser un tel raccord qui permette d'accéder aux mécanismes du robinet avec un minimum d'opérations de démontage d'exécution facile et rapide.

Ces buts sont atteints, selon l'invention, par un dispositif pour le raccordement entre le doigt intérieur de commande des disques obturateurs et le levier extérieur de manoeuvre d'un robinet mélangeur à monocommande, comprenant un élément de doigt de commande pourvu d'un trou filéte pour le montage du levier extérieur de manoeuvre, un capuchon qui est serré sur ledit élément de doigt, et qui est pourvu d'un trou correspondant au trou fileté de l'élément de doigt, et une vis de montage pour le levier extérieur de manoeuvre, qui est vissée dans ledit trou fileté dudit élément en passant à travers ledit trou du capuchon, dans lequel l'élément doigt de commande est constitué pour un godet fixé sur l'extrémité d'un doigt de commande, le godet et ledit doigt étant deux pièces distinctes rendues solidaires par des moyens de connexion, et le capuchon est fixé par rapport au godet par la vis de montage du levier de manoeuvre, ledit vis serrant le capuchon entre le levier de manoeuvre et la paroi cylindrique du godet.

Grâce à cette structure du dispositif de raccordement, le godet qui doit être relié au doigt intérieur de commande peut être facilement fabriqué par moulage, même en matière plastique; sa connexion au doigt intérieur peut être faite, selon le moyen traditionnel, par une vis axial, et quand cette connexion a été faite elle ne demande plus d'être dégagée, même pour le plupart des interventions sur le mécanisme du robinet; le capuchon est réduit à sa structure la plus simple possible, il doit être simplement inséré sur le godet et il ne présente à l'extérieur aucun moyen de connexion, said conformation est parfaitement libre pour toute raison esthétique et il peut être décoré, si on le veut, par des éléments en matière ornementale, appliqués; l'ensemble est fixé par vissage de la vis de montage de levier. Cette vis peut faire partie du levier même, ou d'un élément sur lequel le levier est inséré, ou bien elle peut servir pour fixer un organe de support sur lequel est appliqué le levier, préférablement de telle manière à occulter totalement ou partiellement la vis de montage.

Selon un développement de l'invention, le capuchon présente un siège en creux pour un élément décoratif, qui ainsi, après le montage, reste eimprisonné entre le capuchon et le godet intérieur et qui résulte très facilement remplacable. L'élément décoratif, de son côté, peut être lui même pourvu d'un creux correspondant, ou bien il peut être collé sur un élément de support, en définissant alors le creux en coopération avec ledit élément; cette forme de réalisation est particulièrement avantageuse quand l'élément décoratif est en matière dure, comme l'onyx, qui se préterait mal au travail pour former le creux.

Selon un autre développement de l'invention, le godet intérieur est fabriqué en matière plastique et il est pourvu d'une pièce métallique insérée qui présente le trou fileté pour la vis de montage de levier de manoeuvre.

Les susdites et d'autres caractéristiques et avantages de l'objet de l'invention résulteront plus clairement de la suivant description de certaines formes de réalisation, données à titre d'exemples non limitatifs, schématiquement représentées dans le dessin annexé, dans lequel:

la figure 1 montre, en section selon un plan défini par les axes du doigt intérieur de commande et du levier extérieur de manoeuvre, une première forme de réalisation du dispositif de raccordement, pourvue d'un élément décoratif appliqué d'une manière stable au capuchon;

la figure 2 montre de façon similaire une seconde forme dans laquelle l'élément décoratif peut être remplacé sans substituer le capuchon;

la figure 3 montre une troisième forme de réalisation avec un élément décoratif rechangeable dans le capuchon et avec un élément métallique inséré dans le godet;

la figure 4 montre une forme de réalisation dans laquelle la vis de montage porte un support sur lequel est appliqué le levier de manoeuvre de telle manière à couvrir la vis de montage.

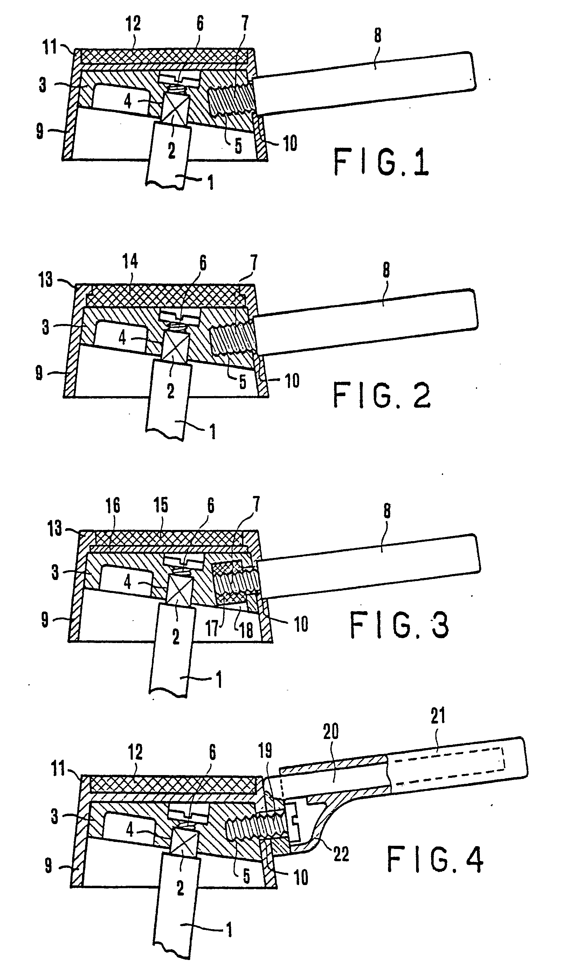

Avec référence à la figure 1, le numero 1 indique l'extrémité supérieure du doigt intérieur de commande d'un robinet mélangeur à monocommande, pourvue d'une partie carrée 2 et d'un trou interne fileté pour l'application du raccord pour le levier de manoeuvre. La première partie du dispositif de raccordement selon l'invention est constituée par un godet 3 qui présente une ouverture centrale 4, dans ce cas carrée, pour être appliqué sur le doigt de commande 1 et y être fixé simplement à l'aide d'une vis axiale 6. En outre, le godet 3 présente un trou fileté 5 pour le montage d'une vis 7 qui, dans ce cas, constitue par elle même une extrémité du levier extérieur de manoeuvre 8 du robinet. Les axes des parties 1 et 8 doivent en général former entre eux un angle non droit, pour résulter dans les positions techniquement et pratiquement préférables, et cela rendrerait très difficile travailler mécaniquement une pièce qui présenterait des moyens de connexion disposés selon lesdits deux axes, mais dans la construction selon l'invention le godet 3 peut être moulé, préférablement en matière plastique, ce qui rend très facile sa fabrication. Le trou fileté 5 peut être obtenu déjà fileté par le moulage même, ou bien il peut aussi ne pas être initialement fileté et être ensuite fileté par le vissage de la vis 7, constituée par une vis autofileteuse. La pièce 8, au lieu de constituer par elle même le levier de manoeuvre, peut être aussi simplement une tige sur laquelle est inséré le levier de manoeuvre proprement dit.

Sur le godet 3, avant le vissage de la vis 7, est inséré un capuchon 9 ayant une cavité interne dont la partie extréme répète subtantiellement le profile extérieur du godet 3, et ledit capuchon 9 présente un trou 10 qui, quand le capuchon est inséré sur le godet, se trouve en correspondance du trou fileté 5 de ce dernier. A' part ces caractéristiques obligées, le capuchon 9 peut être conformé de manière désirée et il peut être fabriqué en tout matériau approprié. Particulièrement, sa surface supérieure (qui couvre et cache la vis de fixation du godet 3 sur le levier de commande 1) peut être finie de toute façon, lisse ou ornementée et en particulier, comme dans la forme représentée, elle peut présenter un bord 11 dans lequel peut être insérée une plaquette ornementale 12 constituant un élément décoratif en matériau de valeur ou son imitation, tels qu'onyx naturel ou artificiel, sodalithe, céramique, matière plastique et. La plaquette 12 est collée dans le siège défini par le board 11 et elle ne peut donc pas être rechangée, mais quand elle doit être substituée, il suffit de remplacer le capuchon 9 qui la porte avec un autre capuchon muni d'une plaquette ornementale neuve ou différente 12 sans qu'il soi nécessaire de substituer aucune autre partie du robinet, telle que le godet 3 et le levier 8, En outre, l'opération de substitution est facile et rapide.

La simple opération de vissage du levier 8 avec sa vis 7 dans le trou fileté 5 du godet 3 en passant à travers le trou 10 du capuchon 9 assemble toutes les susdites pièces en réalisant le raccordement entre les parties 1 et 8 et le finissage esthétique du robinet, qui ne montre ainsi aucun élément de fixation visible, tout sans aucune compromission de la facilité pratique des opérations de montage et démontage. Il est à remarquer que, en dévissant le levier 8 et en enlevant le capuchon 9, on a un large accès aux parties du robinet situées au-dessus, ce qui autorise beaucoup d'opérations de réparations et d'entretien sand devoir séparer le godet 3 du doigt 1.

Selon la figure 2 le capuchon 9, au lieu d'avoir un bord 11 qui délimite simplement le siège pour la plaquette ornementale 12, a un bord en creux 13. Dans ce cas, la plaquette ornementale 14 a elle aussi un creux correspondant. Elle peut être insérée dans le capuchon 9 et, après l'application du capuchon sur le godet 3, elle résulte efficacement retenue. Néanmoins, en détachant le capuchon 9 du godet 3, la plaquette 14 peut être facilement substituée sans qu'il soit nécessaire de substituer le capuchon 9.

Puisque, dans certains cas, la matière qui constitue la plaquette ornementale ne se prête pas bien pour la réalisation d'un bord en creux, la plaquette peut être réalisée, comme le montre la figure 3, en collant un simple disque 15 de matière de valeur sur un disque inférieur plus grand 16 d'un matériau quelconque, qui sert de support et réalise l'engagement avec le creux du bord 13 du capuchon 9.

La figure 3 montre aussi qu'une pièce métallique 17 percée et filetée (laquelle peut être constitué par un simple écrou) peut être introduite dans une cavité 18 du godet 3 pour réaliser le trou fileté pour la vis 7 de montage du levier de manoeuvre. Cela assure d'une manière économique une grande résistance de l'accouplement du levier, même quand on utilise un matériau à faible résistance pour former le godet 3.

Comme le montre la figure 4, la vis 19 de montage du levier, au lieu de constituer l'extrémité du levier 8 ou d'une tige de support dudit levier, peut servir pour fixer un organe de support 20, dans ce cas en équerre, sur lequel est inséré le levier 21 qui, par une appendice 22, couvre la tête de la vis 19. Celle-ci, quand il est nécessaire, peut être rejointe en défilant le levier 21 de support 20. Alternativement, l'appendice 22 du levier 21 pourrait être percée pour permettre l'accès à la vis 19.

Des différentes modifications peuvent être apportées au dispositions décrites. Par exemple, comme déjà dit, le trou fileté 5 pourrait être réalisé constructivement sans filetage et être ensuite fileté par une vis 7 ou 19 autofileteuse. La plaquette 12, 14 ou 15, au lieu d'occuper presque toute la surface supérieure du capuchon 9, pourrait en occuper seulement une partie plus réduite, ou bien être éventuellement profilée et/ou constituée par différentes parties unies ou séparées. La pièce métallique 17 pourrait être substituée par une pièce en résine synthétique de haute résistance, et/ou être incorporée au moment du moulage dans le godet 3, au lieu d'être insérée dans une cavité de ce godet. Les moyens pour unir et fixer le godet 3 au levier intérieur 1 peuvent être quelconques et, par exemple, ils peuvent comprendre un couplage à dents, une vis de pression radiale etc. Même les positions relatives des axes des parties 1 et 8 peuvent varier selon les exigences constructives et de l'installation.

**Revendications**

1. Dispositif pour le raccordement entre le doigt intérieur de commande (1) des disques obturateurs et le levier extérieur de manoeuvre (8; 21) d'un robinet mélanveur à monocommande, comprenant:

— un élément de doigt de commande (1—4) pourvu d'un trou fileté (5; 17) pour le montage du levier extérieur de manoeuve (8; 21);
— un capuchon (9) qui est serré sur ledit élément de doigt (1—4), et qui est pourvu d'un trou (10) correspondant au trou fileté (5; 17) de l'élément de doigt (1—4);
— et une vis de montage (7; 19) pour le levier extérieur de manoeuvre (8; 21), qui est vissée dans ledit trou fileté (5; 17) de l'élément de doigt en passant à travers ledit trou (10) du capuchon (9),

caractérisé par le fait:

— que l'élément de doigt de commande (1—4) est constitué par un godet (3) fixé sur l'extrémité d'un doigt de commande (1), le godet et ledit doigt étant) deux pièces distinctes rendues solidaires par des moyens de connexion (6),
— et que le capuchon (9) est fixé par rapport au godet (3) par la vis de montage (7; 19) du levier de manoeuvre (8; 21), ladite vis (7; 19) serrant le capuchon (9) entre le levier de manoeuvre (8; 21) et la paroi cylindrique du godet (3).

2. Dispositif de raccordement selon la revendication 1, caractérisé en ce que ledit godet (3) est fabriqué en matière plastique.

3. Dispositif de raccordement selon la revendication 2, caractérisé en ce que ledit trou (5) pour la vis de montage (7; 19) du levier de manoeuvre (8; 21) est réalisé sans filetage pendant le moulage, et que la vis de montage (7, 19) est autofileteuse.

4. Dispositif de raccordement selon la revendication 2, caractérisé en ce que le godet (3) comporte une pièce (17) en matériau de plus grande résistance qui présente le trou fileté et qui est insérée dans une cavité (18) du godet (3) ou incorporée dans son moulage.

5. Dispositif de raccordement selon la revendication 1, caractérisé en ce que ledit capuchon (9) présente au moins un siège pour y insérer au moins un élément ornemental (12; 14; 15).

6. Dispositif de raccordement selon la revendication 5, caractérisé en ce que ledit siège du capuchon (9) destiné à recevoir un élément ornemental (14; 15) présente un bord en creux (13) pour retenir ledit élément ornemental entre ledit bord (13) et le godet (3) du dispositif de raccordement, qui est situé à l'intérieur de capuchon (9).

7. Dispositif de raccordement selon la revendication 6, caractérisé en ce que l'élément ornemental (15) est appliqué sur une plaquette de support (16) de dimensions plus grandes, qui détermine un bord en creux par rapport à l'élément ornemental (15).

8. Dispositif de raccordement selon la revendication 1, caractérisé en ce que la vis de montage (7) est formée par une extrémité du levier de manoeuvre (8) ou d'un élément (20) sur lequel est applique le levier (21).

9. Dispositif de raccordement selon la revendication 1, caractérisé en ce que ladite vis de montage (19) fixe un élément de support (20) sur lequel est inséré un levier de manoeuvre (21) ayant une partie (22) disposée de manière qu'elle cache totalement ou partiellement ladite vis de montage (19).

**Patentansprüche**

1. Vorrichtung zur Verbindung zwischen dem inneren Steuerungsfinger (1) zum Steuern der Verschlussscheibein und dem äusseren Steuerungshebel (8; 21) einer Einhebelmischarmatur, umfassend:

— ein mit einer Gewindebohrung (5; 17) zur Montage des äusseren Steuerungshebels (8, 21) versehenes Steuerungsfingerelement (1—4);
— eine Kappe (9), die auf das Fingerelement (1—4) festgezogen und mit einer der Gewindebohrung (5, 17) des Fingerelementes (1—4) entsprechende Bohrung (10) versehen ist;
— une eine Montageschraube (7; 19) für den äusseren Steuerungshebel (8; 21), die durch die Bohrung (10) der Kappe (9) hindurchgehend in die Gewindebohrung (5; 17) des Fingerelementes (1—4) eingeschraubt ist,

dadurch gekennzeichnet,

— dass das Steuerungsfingerelement (1—4) aus einem auf dem Ende eines Steurungsfingers (11) befestigten Becher (3) besteht, wobei der Becher und der Finger zweit separate, durch Verbindungsmittel (6) fest miteinander verbundene Stücke sind,
— und dass die Kappe (9) in Bezug auf den Becher (3) mittels der Montageschraube (7; 19) des Steuerungshebels (8; 21) befestigt ist, wobei die Schraube (7; 19) die Kappe (9) zwischen dem Steuerungshebel (8; 21) und der zylindrischen Wand des Bechers (3) festklemmt.

2. Verbindungsvorrichtung nach Anspruch 1, dadurch gekennzeichnet, dass der Becher (3) Kunststoff hergestellt ist.

3. Verbindungselement nach Anspruch 2, dadurch gekennzeichnet, dass die Bohrung (5) für die Montageschraube (7; 19) des Steuerungshebels (8; 21) ohne Gewindeschneiden während des Pressions hergestellt wird und das die Montageschrauch (7; 19) selbstschneidend ist.

4. Verbindungsvorrichtung nach Anspruch 2, dadurch gekennzeichnet, dass der Becher (3) ein aus einem Material höheren Widerstandes hergestelltes Stück (17) enthält, das die Gewindebohrung aufweist und in eine Ausnehmung (18) des Becher (3) eingesetzt oder in den Becher während des Pressens desselben eingebaut wird.

5. Verbindungsvorrichtung nach Anspruch 1, dadurch gekennzeichnet, dass die Kappe (9) wenigstens einen Sitz zum Einsetzen wenigstens eines Ornamentstückes (12; 14; 15) aufweist.

6. Verbindungsvorrichtung nach Anspruch 5, dadurch gekennzeichnet, dass der zur Aufnahme eines Ornamentstückes (14; 15) bestimmte Sitz der Kappe (9) einen eine Nut bildenden Rand (13) zum Festhalten des Ornamentstückes zwischen dem Rand (13) und dem innerhalb der Kappe (9) vorgesehenen Becher (3) aufwsist.

7. Verbindungsvorrichtung nach Anspruch 6, dadurch gekennzeichnet, dass das Ornamentstück (15) auf einem Tragplättchen grösserer Abmessungen aufgebracht ist, das einen eine Nut in Bezug auf as Ornamentstück (15) bildenden Rand aufweist.

8. Verbindungsvorrichtung nach Anspruch 1, dadurch gekennzeichnet, dass die Montageschraube (7) durch ein Ende des Steuerungshebels (8) oder eines den Hebel (21) tragenden Elemente (20) gebildet ist.

9. Verbindungsvorrichtung nach Anspruch 1, dadurch gekennzeichnet, dass die Montageschraube (19) ein Tragelement (20) befestigt, auf den ein Steuerungshebel (21) aufgeschoben ist, welcher einen derart angeordneten Teil (22) aufweist, dass er die Montageschraube (19) vollständig oder teilweise verbirgt.

**Claims**

1. A connection device for connecting the inner control finger (1) of the shutter disks to the outer operating lever (8; 21) of a single-control mixer valve, comprising:

— a control finger member (1—4) provided with a threaded hole (5; 17) for mounting the outer operating lever (8; 21);
— a cap (9) clamped on said finger member (1—4) and provided with a hole (10) corresponding to the threaded hole (5; 17) of the finger member (1—4);
— and an assembly screw (7; 19) for the outer operating lever (8; 21), which is screwed into said threaded hole (5; 17) of the finger member by passing through said hole (10) of the cap (9);

characterized in that:

— the control finger member (1—4) is formed by a cup member (3) mixed onto the end of a control finger (1), the cup member and said finger being two separate members rigidly connected to one another by connection means (6),
— and the cap (9) is fixed with respect to the cup member (3) by the assembly screw (7; 19) of the operating lever (8; 21), said screw (7; 19) clamping the cap (9) between the operating lever (8; 21) and the cylindrical wall of the cup member (3).

2. A connection device according to Claim 1, characterized in that said cup member (3) is made of plastics.

3. A connection device according to Claim 2, characterized in that said hole (5) for the assembly screw (7; 19) of the operating lever (8; 21) is made without threading during the molding and that the assembly screw (7, 19) is self-threading.

4. A connection device according to Claim 2, characterized in that the cup member (3) comprises an element (17) of higher strength which is provided with the threaded hole and is inserted into a recess (18) of the cup member (3) or is incorporated into this latter during the molding.

5. A connection device according to Claim 1, characterized in that said cap (9) is provided with at least one seating for inserting thereinto at least one ornamental element (12; 24; 15).

6. A connection device according to Claim 5, characterized in that said seating of the cap (9) intended to receive an ornamental element (14; 15) has a hollowed rim (13) intended to retain said ornamental element between said rim (13) and the cup member (3) of the connection device, which is located within the cap (9).

7. A connection device according to Claim 6, characterized in that the ornamental element (15) is mounted on a support plaque (16) of larger dimensions, which defines a hollowed rim with respect to the ornamental element (15).

8. A connection device according to Claim 1, characterized in that the assembly screw (7) is formed by an end of the operating lever (8) or of a member (20) on which the lever (21) is mounted.

9. A connection device according to Claim 1, characterized in that said assembly screw (19) fixes a support member (20) on which is inserted an operating lever (21) having a portion (22) which is disposed in such a manner as to completely or partially hide said assembly screw (19).

FIG.1

FIG.2

FIG.3

FIG.4